(19) 

Europäisches
Patentamt

European
Patent Office

Office européen
des brevets

(11) **EP 1 223 743 B1**

(12) **EUROPÄISCHE PATENTSCHRIFT**

(45) Veröffentlichungstag und Bekanntmachung des
Hinweises auf die Patenterteilung:
**15.08.2007  Patentblatt 2007/33**

(51) Int Cl.:
***H04N 1/40*** *(2006.01)*

(21) Anmeldenummer: **01129805.6**

(22) Anmeldetag: **14.12.2001**

(54) **Verfahren zur rasteradaptiven Kopierretusche**

Method for screen adaptive copying retouching

Procédé de retouche copiante adaptative à la trame

(84) Benannte Vertragsstaaten:
**DE DK FR GB**

(30) Priorität: **12.01.2001  DE 10101137**

(43) Veröffentlichungstag der Anmeldung:
**17.07.2002  Patentblatt 2002/29**

(73) Patentinhaber: **Heidelberger Druckmaschinen
Aktiengesellschaft
69115 Heidelberg (DE)**

(72) Erfinder:
• **Braun, Klaus
24146 Kiel (DE)**
• **Werner, Winfried
24109 Kiel (DE)**

(56) Entgegenhaltungen:
**EP-A- 0 111 026**          **JP-A- 5 276 358**
**US-A- 5 790 273**

EP 1 223 743 B1

## Beschreibung

Die Erfindung bezieht sich auf das Gebiet der elektronischen Reproduktionstechnik und betrifft ein Verfahren zur Retusche der Bilddaten eines digital gespeicherten Bildes. Retuscheverfahren werden in der elektronischen Reproduktionstechnik verwendet, um die Bilder farblich zu korrigieren und um Fehlerstellen im Bild zu beseitigen.

In der Reproduktionstechnik werden Druckvorlagen für Druckseiten erzeugt, die alle zu druckenden Seitenelemente wie Texte, Grafiken und Bilder enthalten. Im Fall der elektronischen Herstellung der Druckvorlagen liegen diese Elemente in Form von digitalen Daten vor. Für ein Bild werden die Daten z.B. erzeugt, indem die Bildvorlage in einem Scanner punkt- und zeilenweise abgetastet wird, jeder Bildpunkt in Farbkomponenten zerlegt wird und die Farbwerte dieser Komponenten digitalisiert werden. Je nach dem später verwendeten Ausgabeprozeß, z.B. Ausgabe auf einem Farbdrucker oder Drucken in einer konventionellen Druckmaschine, werden die Daten für die Seitenelemente in den Farbkomponenten Rot, Grün und Blau (RGB) oder in den Druckfarben des Vierfarbdrucks Cyan, Magenta, Gelb und Schwarz (CMYK) erzeugt und gespeichert.

Im weiteren Arbeitsablauf werden die digitalisierten Bilder zusammen mit den Texten und Grafiken an einem Computer Arbeitsplatz unter Sichtkontrolle auf einem Farbmonitor oder automatisch nach gespeicherten Layoutvorgaben elektronisch montiert. Die fertige Druckseite wird dabei in ein für die Ausgabe geeignetes Datenformat umgewandelt und gespeichert. Die Druckseitendaten für jede der Druckfarben (RGB bzw. CMYK) werden als Farbauszugsdaten bezeichnet. Die Farbauszugsdaten werden für die konventionellen Druckverfahren auf Farbauszugsfilme oder auf Druckplatten belichtet oder sie werden direkt zu einem Farbdrucker oder zu einer digitalen Druckmaschine übertragen und dort ausgedruckt. In der Regel müssen die Farbauszugsdaten vor der Ausgabe gerastert werden, d.h. die Intensitätswerte der Farbauszugsdaten werden beispielsweise in ein periodisches Muster von Rasterpunkten unterschiedlicher Größe umgewandelt, mit denen im fertigen Druckprodukt dem Auge unterschiedliche Intensitäten der Druckfarben simuliert werden. Es kommt auch vor, daß bereits gerasterte Farbauszugsfilme vorhanden sind, die in eine neu herzustellende Druckseite integriert werden sollen. In dem Fall werden diese Farbauszugsfilme mit hoher Auflösung gescannt, und die so gewonnenen digitalen Daten werden für die elektronische Montage der Druckseite verwendet.

Ein häufig angewendetes Retuscheverfahren ist die kopierende Retusche, wie sie in der Europäischen Patentschrift 0 111 026 beschrieben ist. Sie wird genutzt, um Informationen eines Bildbereichs auf einen anderen Bildbereich Bildpunkt für Bildpunkt zu übertragen. Damit können Fehlerstellen im Bild, wie z.B. Kratzer, beseitigt werden, indem in den beschädigten Bildbereich Bildpunkte aus einem benachbarten Bildbereich mit ähnlicher Farbe und Struktur kopiert werden. Die kopierende Retusche wird aber auch angewendet, wenn für werbegrafische Zwecke ein Objekt oder ein Muster in einem Bild mehrfach wiederholt werden soll oder in ein anderes Bild kopiert werden soll.

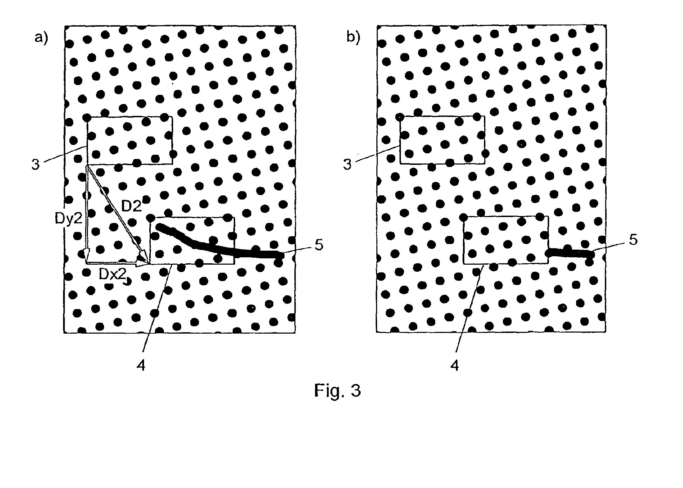

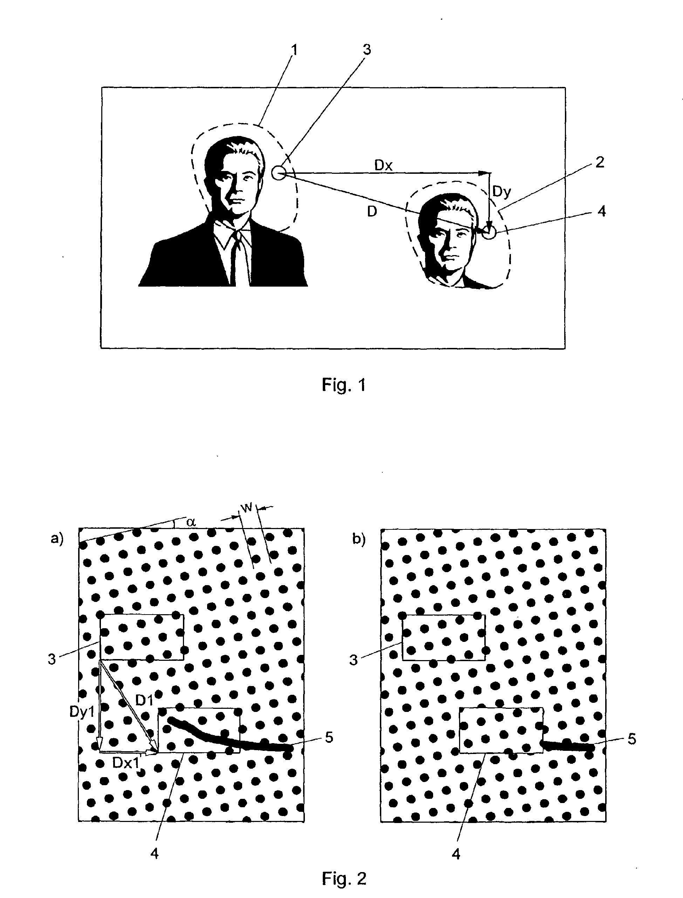

Fig. 1 veranschaulicht an einem Beispiel die Funktionsweise der kopierenden Retusche. Ein Lesebereich 1 eines Bildes soll in einen Schreibbereich 2 kopiert werden. Dazu überstreicht der Bediener mit einer Lesemarke 3, die auf dem Bildschirm eingeblendet wird und deren Form und Größe beliebig wählbar ist, den Lesebereich 1. Die Lesemarke repräsentiert einen elektronischen Retuschepinsel, der der Bewegung eines Koordinatenerfassungsstiftes oder einer Computermaus folgt, die der Bediener entsprechend bewegt. In einer nach Richtung und Abstand vorher ausgewählten Distanz D wird auf dem Bildschirm eine Schreibmarke 4 eingeblendet, die der Lesemarke 3 immer mit der Distanz D folgt. Die Distanz D ist ein Vektor mit den Komponenten Dx und Dy in einem rechtwinkligen Koordinatensystem. In einem Speicherbereich des Computer Arbeitsplatzes, der das Bild enthält, werden während der Retusche laufend die unter der Lesemarke 3 befindlichen Bildpunkte in die entsprechenden Bildpunkte unter der Schreibmarke 4 übertragen.

Wenn mit der Kopierretusche nach dem Stand der Technik ein beschädigter Bildbereich, der dem Schreibbereich 2 entspricht, durch Kopieren von Bildpunkten aus einem benachbarten Lesebereich restauriert werden soll, wählt der Bediener die Distanz D nach Abstand und Richtung manuell unter Sichtkontrolle auf dem Bildschirm. Dazu markiert er beispielsweise die Anfangsposition der Lesemarke 3 und anschließend die Anfangsposition der Schreibmarke 4. Aus den beiden Positionen berechnet der Computer die Komponenten Dx und Dy der Distanz D und führt bei der folgenden Retusche die Schreibmarke 4 immer mit der Distanz D der Lesemarke 3 nach. Wenn der zu retuschierende Bildbereich ein periodisches Muster enthält, z.B. das Muster der Rasterpunkte in einem gescannten Farbauszugsfilm, ist es für den Bediener schwierig und zeitaufwendig, die Anfangspositionen von Lesemarke 3 und Schreibmarke 4 so genau zu markieren, daß das aus dem Lesebereich kopierte periodische Muster exakt deckungsgleich auf dem im Schreibbereich ursprünglich vorhandenen Muster liegt. Wenn das kopierte Muster nicht genau paßt, muß der Bediener gegebenenfalls die kopierten Bilddaten wieder löschen und die Kopierretusche neu beginnen.

Es ist daher die Aufgabe der vorliegenden Erfindung, die Nachteile des bekannten Verfahrens der Kopierretusche zu vermeiden und ein verbessertes Verfahren anzugeben, mit dem ein periodisches Muster paßgenau kopiert werden kann. Diese Aufgabe wird durch die Merkmale des Anspruchs 1 und der Unteransprüche 2 bis 3 gelöst.

Die Erfindung wird nachfolgend anhand der Figuren 1 bis 3 näher beschrieben.

Es zeigen:

Fig. 1                    die prinzipielle Funktionsweise der Kopierretusche nach dem Stand der Technik,

Fig. 2a und Fig. 2b       die Kopierretusche eines gerasterten Farbauszugs nach dem Stand der Technik, und

Fig. 3a und Fig. 3b       die Kopierretusche eines gerasterten Farbauszugs nach dem erfindungsgemäßen Verfahren.

Fig. 2a zeigt einen Ausschnitt aus einem gerasterten Farbauszug, dessen Raster durch die Rasterweite w und den Rasterwinkel $\alpha$ gekennzeichnet ist. Der Ausschnitt enthält eine Fehlerstelle 5, die beispielsweise durch einen Kratzer auf dem gescannten Farbauszugsfilm verursacht wurde. Die Fehlerstelle 5 soll mit Hilfe der bekannten Kopierretusche beseitigt werden. Der Bediener markiert die Anfangspositionen der hier rechteckigen Lesemarke 3 und der gleichgroßen Schreibmarke 4. Dabei gelingt es nicht mit der erforderlichen Genauigkeit, die Distanz D1 nach Abstand und Richtung so festzulegen, daß die Lesemarke 3 und die Schreibmarke 4 sowohl in x-Richtung als auch in y-Richtung die gleiche Phasenlage bezüglich des periodischen Rasters haben. Fig. 2b zeigt den teilweise retuschierten Ausschnitt, in dem die Bildpunkte innerhalb der Lesemarke 3 in die entsprechenden Bildpunktpositionen der Schreibmarke 4 kopiert worden sind. Infolge der nicht angepaßten Phasenlage der Schreibmarke 4 ist das Muster der kopierten Bildpunkte gegen das Raster außerhalb der Schreibmarke versetzt. Für eine solche Unregelmäßigkeit in einem sonst gleichmäßigen Muster ist das Auge sehr empfindlich, so daß der Versatz der kopierten Bildpunkte sich besonders störend bemerkbar macht.
Nach dem erfindungsgemäßen Verfahren wird die zunächst vom Bediener durch das Markieren der Anfangspositionen von Lesemarke 3 und Schreibmarke 4 gewählte Distanz D1 mit ihren Komponenten Dx1 und Dy1 nachfolgend automatisch so korrigiert, daß die Schreibmarke 4 sowohl in x-Richtung als auch in y-Richtung die gleiche Phasenlage bezüglich des Rasters hat wie die Lesemarke 3. Dazu werden korrigierte Distanzkomponenten Dx2 und Dy2 berechnet, die sich nach den Gleichungen für die Drehung eines regelmäßigen Gitters mit der Maschenweite w in einem rechtwinkligen Koordinatensystem um den Winkel $\alpha$ ergeben.

$$Dx2 = m \times w \times \cos \alpha + n \times w \times \sin \alpha$$
$$Dy2 = - m \times w \times \sin \alpha + n \times w \times \cos \alpha \tag{1}$$

Die ganzen Zahlen m und n werden dabei vorzugsweise so gewählt, daß sich die korrigierten Distanzkomponenten Dx2 und Dy2 nur um die kleinsten möglichen Differenzen von den ursprünglich gewählten Distanzkomponenten Dx1 bzw. Dy1 unterscheiden, d.h. daß die absoluten Differenzen

$$|Dx2 - Dx1|$$
$$|Dy2 - Dy1| \tag{2}$$

ein Minimum werden. Dadurch wird als korrigierte Anfangsposition der Schreibmarke 4 in der Nähe des Endpunkts des Distanzvektors D1 der nächstliegende Punkt gewählt, der in x-Richtung und in y-Richtung die gleiche Phasenlage zum Raster hat wie die Anfangsposition der Lesemarke 3.
Fig. 3a zeigt die Lage von Lesemarke 3 und Schreibmarke 4 für die erfindungsgemäß korrigierte Distanz D2. Fig. 3b zeigt den teilweise retuschierten Ausschnitt, in dem kein Versatz des kopierten Rasterbereichs gegenüber dem umgebenden Raster mehr auftritt. Die Parameter des Rasters, Rasterweite w und Rasterwinkel $\alpha$, sind im allgemeinen bekannt, so daß sie der Bediener vorab eingeben oder aus einer im Computer gespeicherten Liste auswählen kann. Die Rasterparameter können auch schon beim Scannen des Farbauszugs erfaßt werden und in einen Informationsblock am Anfang der Farbauszugsdaten geschrieben werden, wo sie das Retuscheverfahren dann ablesen kann. Alternativ können sie aber auch nach einem der bekannten Verfahren aus den Bilddaten des gescannten Farbauszugs bestimmt werden, z.B. durch die Auswertung der zweidimensionalen Autokorrelationsfunktion oder durch die Analyse der Fouriertransformation. Das erfindungsgemäße Retuscheverfahren ist nicht auf die Anwendung bei gerasterten Farbauszügen beschränkt. Es kann in allen Fällen verwendet werden, bei denen eine Kopierretusche in einem Bildbereich ausgeführt werden soll, der ein periodisches Muster enthält.

**EP 1 223 743 B1**

**Patentansprüche**

1. Verfahren zur Kopierretusche von digitalen Bilddaten, die ein periodisches Muster enthalten, wobei

   - die Anfangspositionen einer Lesemarke (3) und einer Schreibmarke (4) festgelegt werden,
   - aus den Anfangspositionen ein Distanzvektor (D1) berechnet wird, und
   - die Bilddaten der unter der Lesemarke (3) befindlichen Bildpunkte in die Bildpunkte unter der Schreibmarke (4) kopiert werden, **dadurch gekennzeichnet, daß** ein korrigierter Distanzvektor (D2) so berechnet wird, daß die Lesemarke (3) und die Schreibmarke (4) in bezug auf das periodische Muster die gleiche Phasenlage haben.

2. Verfahren nach Anspruch 1, **dadurch gekennzeichnet, daß** die Kopierretusche auf gerasterte Farbauszugsdaten angewendet wird, wobei das Raster durch die Rasterweite w und den Rasterwinkel $\alpha$ **gekennzeichnet** ist.

3. Verfahren nach Anspruch 1 oder 2, **dadurch gekennzeichnet, daß** der Distanzvektor (D1) die rechtwinkligen Komponenten Dx1 und Dy1 und der korrigierte Distanzvektor (D2) die rechtwinkligen Komponenten Dx2 und Dy2 haben, und die Komponenten Dx2 und Dy2 nach den Gleichungen

$$Dx2 = m \times w \times \cos \alpha + n \times w \times \sin \alpha$$

$$Dy2 = - m \times w \times \sin \alpha + n \times w \times \cos \alpha$$

ermittelt werden, wobei ganze Zahlen m und n so bestimmt werden, daß die absoluten Differenzen

$$|Dx2 - Dx1|$$

$$|Dy2 - Dy1|$$

ein Minimum werden.

**Claims**

1. A method of copy retouching digital image data that contain a periodic pattern, wherein

   - a starting position of a read mark (3) and of a write mark (4) are defined,
   - a distance vector (D1) is calculated from the starting positions, and
   - the image data of the image points located under the read mark (3) are copied into image points that are located under the write mark (4),

   **characterized in**
   **that** a corrected distance vector D2 is calculated such that the read mark (3) and the write mark (4) have the same phase position in relation to the periodic pattern.

2. Method according to claim 1,
   **characterized in**
   **that** the copy retouching process is applied to screened colour extract data, the screen being **characterized by** the screen width w and the screen angle $\alpha$.

3. Method according to claim 1 or 2,
   **characterized in**
   **that** the distance vector D1 has the rectangular components Dx1 and Dy1 and the corrected distance vector D2 has the rectangular components Dx2 and Dy2, and that the components Dx2 and Dy2 are determined in accordance with equations:

$$Dx2 = m \times w \times \cos\alpha + n \times w \times \sin\alpha$$

$$Dy2 = -m \times w \times \sin\alpha + n \times w \times \cos\alpha$$

where m and n are integers and are selected to minimize the absolute value of the differences

$$|Dx2\text{-}Dx1|$$

$$|Dy2\text{-}Dy1|.$$

**Revendications**

1. Procédé de retouche copiante de données d'image numériques, qui contiennent un modèle périodique,

   ➤ les positions initiales d'un repère de lecture (3) et d'un repère d'écriture (4) étant fixées,

   ➤ un vecteur de distance (D1) étant calculé à partir des positions initiales, et

   ➤ les données d'image des points d'image se trouvant sous le repère de lecture (3) étant copiées dans les points d'image sous le repère d'écriture (4), **caractérisé en ce qu'**un vecteur de distance (D2) corrigé est calculé de telle sorte que le repère de lecture (3) et le repère d'écriture (4) aient la même position de phase par rapport au modèle périodique.

2. Procédé selon la revendication 1, **caractérisé en ce que** la retouche copiante est appliquée à des données de sélection chromatique tramées, la trame étant **caractérisée par** la largeur de trame w et l'angle de trame $\alpha$.

3. Procédé selon la revendication 1 ou 2, **caractérisé en ce que** le vecteur de distance (D1), les composants à angle droit Dx1 et Dy1 et le vecteur de distance (D2) corrigé ont les composants à angle droit Dx2 et Dy2, et les composants Dx2 et Dy2 sont déterminés selon les équations suivantes

$$Dx2 = m \times w \times \cos\alpha + n \times w \times \sin\alpha$$

$$Dy2 = -m \times w \times \sin\alpha + n \times w \times \cos\alpha$$

des nombres entiers m et n étant déterminés de telle sorte que les différences absolues

$$[Dx2 - Dx1]$$

$$[Dy2 - Dy1]$$

deviennent un minimum.

Fig. 3

**Fig. 1**

**Fig. 2**

**EP 1 223 743 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0111026 A